# EUROPEAN PATENT SPECIFICATION

(11) **EP 3 136 724 B1**
(45) Date of publication and mention of the grant of the patent: **22.04.2020**
(21) Application number: 16001705.9
(22) Date of filing: 02.08.2016
(51) Int. Cl.: G02B 27/01, H04N 13/156, H04N 13/239, H04N 13/279, H04N 13/344, H04N 13/366, H04N 13/383

(54) **WEARABLE DISPLAY APPARATUS, INFORMATION PROCESSING APPARATUS, AND CONTROL METHOD THEREFOR**
TRAGBARE ANZEIGEVORRICHTUNG, INFORMATIONSVERARBEITUNGSVORRICHTUNG UND STEUERUNGSVERFAHREN DAFÜR
APPAREIL D'AFFICHAGE PORTABLE, APPAREIL DE TRAITEMENT D'INFORMATIONS ET PROCÉDÉ DE COMMANDE ASSOCIÉ

(30) Priority: 27.08.2015 JP 2015168141
(43) Date of publication of application: 01.03.2017
(73) Proprietor: Canon Kabushiki Kaisha, Tokyo (JP)
(72) Inventor: Ishino, Toshiki, Tokyo (JP)
(74) Representative: WESER & Kollegen Patentanwälte PartmbB

(56) References cited:
- JP-A- 2004 205 711
- US-A1- 2002 075 201
- US-A1- 2005 203 380
- US-A1- 2007 273 610
- US-A1- 2012 294 478

## Description

### BACKGROUND OF THE INVENTION

### Field of the Invention

The present invention relates to a wearable display apparatus represented by an HMD (Head Mounted Display), an information processing apparatus connected to the wearable display apparatus, and a control method for the information processing apparatus.

### Description of the Related Art

In recent years, a video display apparatus (head mounted display = HMD) which is worn on the head of an observer and displays a video in front of the eyes of the observer has been used. The HMD is used as an apparatus with which the observer can experience virtual reality (VR) and mixed reality (MR) for some reasons that, for example, a video can be readily viewed on a large screen or stereopsis is readily implemented.

The HMD for implementing MR includes an image capturing unit for capturing images of an object in correspondence with the right and left eyes of the observer. The HMD also includes display units for respectively superimposing and displaying the images shot by the image capturing unit and 3D-CG object images created by a PC or the like, and observation optical systems for projecting the images on the observer.

Videos projected on the observer are displayed on display devices such as small liquid crystal panels corresponding to the right and left eyes of the observer. The videos are enlarged via the observation optical systems respectively corresponding to the right and left eyes of the observer, and projected on the right and left eyeballs of the observer.

The shot images of the object have a parallax corresponding to the right and left eyes. Furthermore, images each representing the 3D-CG object are created as parallax images corresponding to the right and left eyes of the observer, and then superimposed and displayed on the videos captured by an imaging system. As a result, the observer visually perceives the 3D-CG object as if it existed in a physical space. In this point, the 3D-CG object is also called a virtual object.

To superimpose images each representing a 3D-CG object on images obtained by shooting the outside world using an imaging system, and display the resultant images without giving an unnatural impression to the observer, it is necessary to detect the position and orientation of the HMD, and create images each representing the virtual object in accordance with the detected position and orientation.
As a method of detecting the position and orientation of an HMD worn by the observer, there is known a method of controlling an external sensor separately from the HMD, and calculating the position and orientation of the HMD. There is also known a method of shooting, by the image capturing unit of the HMD, a mark video called a marker, and detecting the position and orientation of the HMD from the shot image of the marker. US 2002/0075201 A1 discloses a head-mounted display system comprising an imaging camera for capturing a workspace and a tracking camera aligned at a similar yaw as the imaging camera for capturing a tracking image including a marker structure. US 2005/0203380 A1 and US 2007/0273610 A1 also relate to head mounted displays including at least one tracking camera.

JP 2004-205711 A discloses a head mounted display including a pair of tracking cameras.

Japanese Patent No. 3363861 (to be referred to as literature 1 hereinafter) discloses a technique of controlling a sensor as a method of detecting the position and orientation of an HMD. However, separately including a sensor increases components, and thus an increase in weight and an increase in cost caused by the increase in components are concerned.

In the method of calculating the position and orientation of an HMD by shooting a mark video called a marker, it is necessary to arrange a number of markers at various positions to improve the detection accuracy. Therefore, the observer unwantedly sees a number of markers in the field of view, thereby causing him/her to lose interest.

Japanese Patent Laid-Open No. 2011-205358 (to be referred to as literature 2 hereinafter) discloses a method in which the image capturing unit of an HMD acquires a video having a wide angle of view, and provides the video having undergone distortion correction to an observer. However, a method of displaying part of a video having a wide angle of view leads to a decrease in resolution, thereby degrading the quality of the video provided to the observer.

### SUMMARY OF THE INVENTION

The present invention in its first aspect provides a wearable display apparatus as specified in claims 1 and 2.

The present invention in its second aspect provides a system as specified in claim 3.

The present invention in its third aspect provides a control method for an information processing apparatus as specified in claim 4.

According to the present invention, it is possible to detect the position and orientation of a wearable display apparatus using a smaller number of markers.

Further features of the present invention will become apparent from the following description of exemplary embodiments (with reference to the attached drawings).

### BRIEF DESCRIPTION OF THE DRAWINGS

Fig. 1 is a view showing the wearing state of an HMD according to an embodiment;
Fig. 2 is a view showing another example of the HMD according to the embodiment;
Fig. 3 is a perspective view showing an optical unit arranged in the HMD according to the present invention;
Fig. 4 is a sectional view showing the arrangement of the optical unit shown in Fig. 3;
Fig. 5 is a view showing the form of a marker according to the embodiment;
Fig. 6 is a view showing examples of images captured by main cameras and sub cameras;
Fig. 7 is a block diagram showing the functional arrangement of an information processing apparatus; and
Fig. 8 is a flowchart illustrating the processing procedure of the information processing apparatus.

### DESCRIPTION OF THE EMBODIMENT

An embodiment of the present invention will be described in detail below with reference to the accompanying drawings.

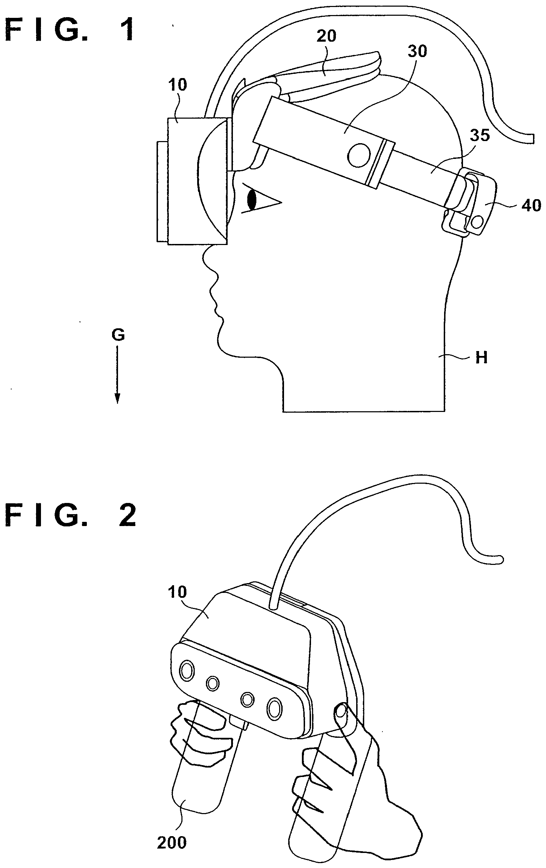

Fig. 1 is a side view showing a video display apparatus (to be referred to as an HMD hereinafter) worn on the head of an observer according to the embodiment. In Fig. 1, reference numeral 10 denotes an HMD main body which incorporates an optical unit 11 (to be described later); 30, a frame for stably bringing the HMD main body 10 into tight contact with the forehead of an observer H; 35, a band member which extends from two ends of the frame 30, is formed by a flexible member (for example, a thin plate made of polypropylene or the like), and tightens the temporal region and occipital region of the observer H securely; and 20 and 40, pad members which are used to stably and comfortably fix the HMD main body 10 to the head of the observer H. By adjusting the full length of the band member 35 while the pad members 20 and 40 abut against the head of the observer H, it is possible to distribute the pressure on the head of the observer H, suppress an unnatural impression given to the observer, and stably fix the HMD main body 10 in front of the eyes of the observer H. The arrangement shown in Fig. 1 frees both hands of the observer H to perform various operations.

Note that if a plurality of people use the same apparatus, attaching and detaching operations may frequently occur, thereby causing a problem in hygiene. Thus, the handled HMD main body 10 may be considered.

Fig. 2 is a view schematically showing the form of a handheld wearable HMD. The HMD main body 10 is separated from a wearing system, and connected to a handheld unit 200. The observer H maintains the handheld unit 200 by hands, thereby maintaining a state in which the HMD main body 10 is worn in front of the eyes of the observer H. The handheld type can eliminate the inconvenience of the detaching operation, and eliminate the demerit of hygiene, thereby providing an environment in which a plurality of people can use the HMD comfortably. However, both or one of the hands is not freed. In either of the arrangements shown in Figs. 1 and 2, the HMD main body 10 is worn in front of the eyes of the observer (brought into tight contact with the observer). Although there are differences in physical structure between the arrangements, such as the presence/absence of the handheld unit 200, there are no differences in electronic and optical arrangements.

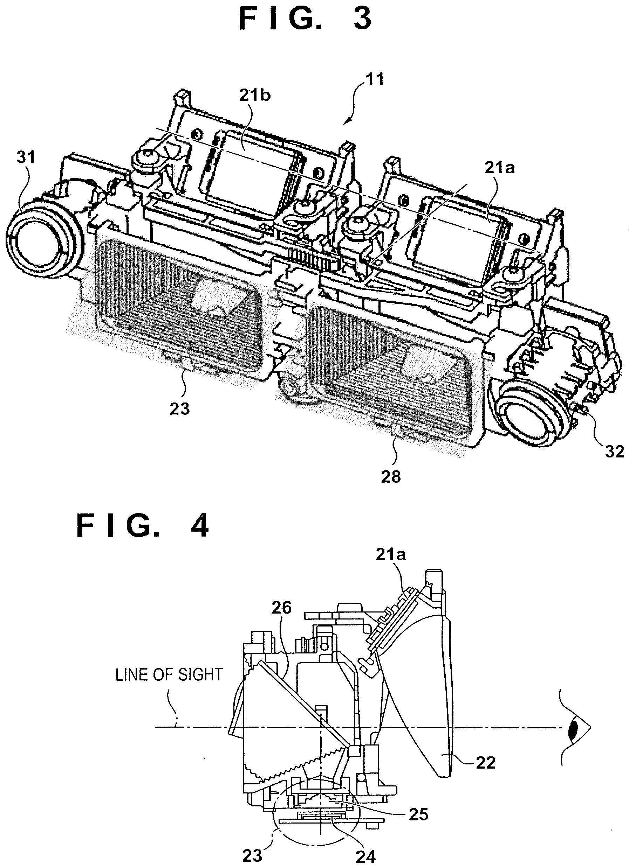

Fig. 3 is a perspective view showing the optical unit 11 arranged in the HMD main body 10. Fig. 4 is a sectional view obtained by cutting the optical unit 11 on one eye side by a plane perpendicular to the optical axis of the observer.

Referring to Figs. 3 and 4, reference numerals 21a and 21b denote display devices which display two-dimensional videos created by an apparatus such as a PC and each of which is formed by an organic EL or a device such as a liquid crystal for displaying a video in a two-dimensional matrix. Note that each display device is not limited to the device for displaying a video in a two-dimensional matrix, and a scan-type device for displaying a video may be used, as a matter of course. Reference numeral 22 denotes a prism serving as a device which enlarges the video displayed on the display device 21a and forms an observation optical system for performing projection on the eyeball of the observer. The display device 21a and the prism 22 are arranged in front of the left eye of the observer. On the other hand, the display device 21b and a corresponding prism are arranged in front of the right eye of the observer.

The videos displayed on the display devices 21a and 21b are enlarged through the corresponding prisms, respectively. When the enlarged videos are displayed in front of the right and left eyes, the observer can obtain a high immersion feeling. Note that the display devices 21a and 21b and the prism 22 function as display units for presenting images to the observer.

Reference numerals 23 and 28 denote cameras for capturing images corresponding to the right and left fields of view of the observer. The camera 23 is formed from an imaging device 24 and a camera lens 25 for forming an image in the imaging device 24. The camera 28 has the same arrangement.

Note that the cameras 23 and 28 capture images each corresponding to the field of view of the observer. To distinguish from another pair of cameras 31 and 32 (to be described later), the cameras 23 and 28 will be referred to as "main cameras" hereinafter and the cameras 31 and 32 will be referred to as "sub cameras" hereinafter for the sake of convenience.

The shooting optical axis of each of the main cameras 23 and 28 is bent once by a mirror 26 in an object direction, and changed in the lower direction, thereby entering the main camera 23 or 28. By bending the optical path once, the overall apparatus is downsized. The purpose is to downsize the apparatus, and thus the number of bends is not limited to one and the bending method is not limited to the mirror, as a matter of course. The optical path may be bent a plurality of times by a prism. The shooting optical axis of each of the main cameras 23 and 28 almost coincides with an observation optical axis on which the observer observes the prism 22, and the main camera shoots a video in the eye direction of the observer. Furthermore, the shooting angle of view (focal length) of each of the main cameras 23 and 28 is almost equal to or slightly wider than the angle of view when the observer observes the video on each of the display devices 21b and 21a. The videos shot by the main cameras 23 and 28 are connected to an external information processing apparatus such as a PC by a cable connected to the substrate of the imaging device 24 (the cable is not shown). The information processing apparatus generates virtual object images by CG, superimposes the generated virtual object images on the input shot images, and displays them on the display devices 21a and 21b. At this time, in accordance with the parallax between the right and left eyes, the information processing apparatus creates a virtual object to be displayed on the right and left display devices 21a and 21b. As a result, the observer observes the virtual object by CG created by the PC as if it existed in the physical space in front of him/her.

For the observer H, the virtual object must exist regardless of the position and orientation of the observer H. For example, when the observer turns right, the virtual object needs to move leftward within the field of view of the observer so that the observer observes the virtual object as if it remained at an original position. That is, the information processing apparatus needs to perform, in each of the images captured by the cameras 23 and 28, processing of superimposing the virtual object so that the position of the virtual object moves leftward. To do this, the position and orientation of the viewpoint of the observer H is detected. To detect the position and orientation of the viewpoint of the observer H, there is provided a technique of arranging a plurality of markers for detecting the position and orientation all over the physical space. The external apparatus already knows the positions and types of the markers. The information processing apparatus performs processing of detecting the markers in the right and left images shot by the cameras of the observer H, and detects the position and orientation of the viewpoint of the observer based on the positions and sizes of the markers in the images. To implement the technique, a preset number or more of markers need to be set within the fields of view of the main cameras 23 and 28, which correspond to the field of view of the observer H. The observer can freely change the observation viewpoint position. Therefore, in order for markers as many as markers which can specify the position and orientation to exist in the captured images even at the worst viewpoint position, it is necessary to arrange markers within a preset interval. As a result, in some cases, many markers fall within the field of view of the observer H, thereby causing him/her to lose interest. To solve this problem, this embodiment will describe an example in which while decreasing the number of markers falling within the field of view of the observer H, the position and orientation of the viewpoint of the observer can be accurately detected. To implement this, in addition to the main cameras 23 and 28, the sub cameras 31 and 32 are arranged outside the main cameras 23 and 28 in the HMD main body 10 according to this embodiment. Each of the main cameras 23 and 28 captures a video of the field of view of the observer H, and has a restricted angle of view (or focal length) to obtain a video equivalent to that which the observer H actually looks at by naked eyes. To the contrary, the sub cameras 31 and 32 are cameras for detecting the position and orientation of the viewpoint of the observer H, and thus have no restrictions on the angles of view. Since the distance between the sub cameras 31 and 32 is set to be longer than that between the right and left eyes of the observer, the accuracy of parallax images is improved.

A method of calculating, in the external apparatus, the position and orientation of the viewpoint of the HMD main body 10 (= the position and orientation of the observer) based on videos captured by the sub cameras 31 and 32 will be described below.

Assume that the external apparatus acquires in advance camera parameters such as the focal lengths of the lenses and the relative positional relationships between the left and right main cameras 23 and 28 and the left and right sub cameras 31 and 32, and stores and holds them.

The sub cameras 31 and 32 are used to calculate the position and orientation of the HMD main body 10, and have shooting angles of view wider than those of the main cameras 23 and 28. Therefore, markers for detecting the position and orientation of the HMD main body 10 exist within the fields of view of the sub cameras 31 and 32, and markers need not exist in the fields of view of the main cameras 23 and 28 in the extreme case. That is, in the same physical space, the number of markers to be arranged can be sufficiently decreased.

To acquire the above-described camera parameters, the shooting angles of view of the sub cameras 31 and 32 include the angles of view of the main cameras 23 and 28. When shooting the same object, it is possible to calculate the position, orientation, focal length, and the like of each camera by comparing videos of the main cameras 23 and 28 and those of the sub cameras 31 and 32.

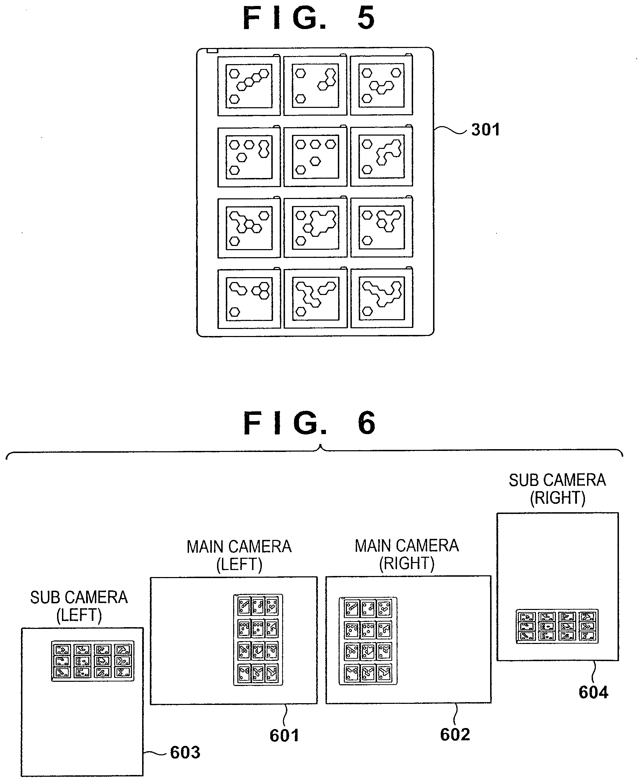

Fig. 5 shows an example of the shape of a marker 301 used to detect the position and orientation of the HMD main body 10. The marker 301 has a flat shape, and has a special geometric pattern drawn on the surface. When the one marker 301 is shot by the HMD main body 10, images 601 to 604 shown in Fig. 6 are captured. The images 601 and 602 are captured by the main cameras 23 and 28, and the images 603 and 604 are captured by the sub cameras 31 and 32. In the embodiment, the focal lengths and the relative relationship such as the position and orientation of the HMD main body are calculated in accordance with a known procedure based on the images captured by the sub cameras 31 and 32. Based on the calculation result, the external apparatus creates images each representing a virtual object based on CG in accordance with the calculated position and orientation, and superimposes them at corresponding positions in the images captured by the main cameras 23 and 28. As a result, even if the observer H moves around in the space, it is possible to create CG in accordance with the observation direction. The observer H can observe the virtual object based on CG as if it was fixed and existed in the physical space.

As described above, the sub cameras 31 and 32 are used to calculate the position and orientation of the HMD main body 10, and have shooting angles of view wider than the angles of view of the main cameras 23 and 28. The sub cameras 31 and 32 are arranged at separated positions outside the main cameras 23 and 28. As a result, the parallax between the sub cameras 31 and 32 is larger than that between the main cameras 23 and 28, thereby making it possible to improve the position detection accuracy of the marker 301.

Videos shot by the sub cameras 31 and 32 include videos shot by the main cameras 23 and 28. Thus, the sub cameras 31 and 32 are configured to shoot videos having wider angles of view.

Consider a case in which images of the main cameras 23 and 28 are independent of videos of the sub cameras 31 and 32. In this case, although the marker 301 is shot by the main cameras, it may be impossible to detect the marker 301 using the sub cameras 31 and 32. In this case, it is impossible to calculate the position and orientation of the HMD main body 10, and superimpose the images each representing the virtual object at correct positions. Therefore, the observer may suspect a failure of the apparatus, and complain about detection of the position and orientation of the HMD main body 10.

According to the embodiment, images shot by the sub cameras 31 and 32 include videos of the main cameras 23 and 28. Therefore, if the marker 301 is shot by the main cameras 23 and 28 for shooting the field of view of the observer H, it is ensured that the marker 301 is detected using the sub cameras 31 and 32, and it is thus possible to detect the position and orientation of the HMD main body 10.

The sub cameras 31 and 32 include the fields of view of the main cameras 23 and 28, and are arranged to be inclined upward or downward. If, for example, the marker 301 is arranged on a ceiling or floor, the marker 301 cannot be detected using the main cameras 23 and 28 unless the HMD is made to turn in that direction, but the sub cameras 31 and 32 have shooting optical axes inclined with respect to those of the main cameras 23 and 28, and can thus detect the marker 301. Therefore, videos from the sub cameras 31 and 32 can be used to detect (or calculate) the position and orientation of the HMD main body 10.

If the marker 301 is arranged on a ceiling or floor, as described above, the observer tends to turn his/her eyes in the horizontal direction in many cases, and thus the marker itself hardly falls within the field of view of the observer H. That is, the observer need not consider the marker. If the marker 301 is arranged on a wall, another person or object may interfere with the marker, thereby making it impossible to detect the marker. In this point, by setting the angles of view of the sub cameras 31 and 32 to include those of the main cameras 23 and 28, and making the sub cameras 31 and 32 turn upward or downward by a predetermined angle, the influence of the interference of another person with the marker can be reduced. In the example shown in Fig. 6, the eye direction of the sub camera 31 faces upward with respect to the optical axis directions of the main cameras 23 and 28, and the sub camera 32 faces downward.

To more preferably detect the marker 301 arranged on a ceiling or floor, the imaging devices of the sub cameras 31 and 32 are rotated by 90° and arranged so that videos shot by the sub cameras 31 and 32 are obtained by shooting images each having a vertically-long aspect ratio. For this reason, the markers in the images 603 and 604 captured by the sub cameras 31 and 32 in Fig. 6 are rotated by 90° with respect to the markers in the images 601 and 602 captured by the main cameras 23 and 28. A vertically-long shooting range allows a wider range of the ceiling or floor to be shot, thereby widening the detectable range of the marker 301. For example, the marker 301 arranged at a position in a direction such as the vertically upward or downward direction in which the observer H does not usually turn his/her eyes can be detected. Furthermore, the observer H can use the HMD without considering the presence of the marker 301, thereby providing a more comfortable environment.

The marker 301 has been described as a marker obtained by drawing a geometric pattern on a flat plate. The shape need not be a rectangle, and various patterns may be used. The marker 301 need not be a flat plate, and may be three-dimensionally arranged. Furthermore, instead of a special shape like the marker 301, a mark such as an edge may be detected from a shot image and the position and orientation of the HMD may be calculated based on the detected edge. The marker is used to calculate the position and orientation of the HMD main body 10, and is not restricted in terms of the shape or the like, as a matter of course.

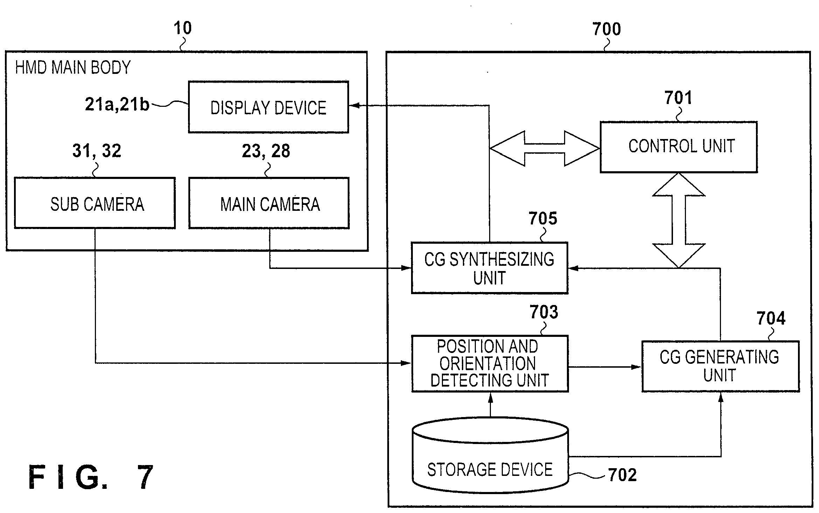

Fig. 7 is a block diagram showing the connection relationship between the HMD main body 10 and an information processing apparatus 700, and the arrangements of the HMD main body 10 and information processing apparatus 700 according to the embodiment.

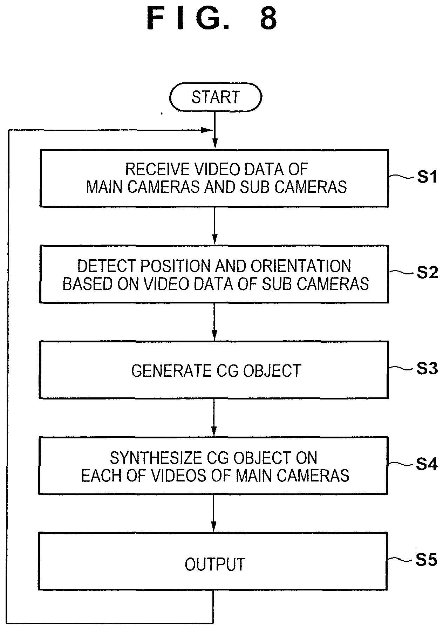

The arrangement of the HMD main body 10 has already been explained, and the arrangement and operation of the information processing apparatus 700 will be described below with reference to a flowchart shown in Fig. 8.

Note that the information processing apparatus 700 has the same hardware as that of a general PC. It is to be understood that the arrangement shown in Fig. 7 is a functional arrangement mainly based on software when an application for communicating with the HMD main body 10 is activated. Thus, a control unit 701 shown in Fig. 7 is formed by a CPU and a RAM storing an application to be executed by the CPU. A storage device 702 stores information indicating the type and arrangement position of the marker 301 in the physical space. Assume that the storage device 702 also stores information about a virtual object to be synthesized. The storage device 702 stores parameters such as the focal length of each camera. The storage device 702 is typically a hard disk device. Furthermore, the HMD main body 10 and the information processing apparatus 700 are connected by, for example, a USB (Universal Serial Bus) interface. Note that it is only necessary to have a sufficient transfer band for receiving digital image data, a communication mode may be a wired or wireless communication mode, and any kind of interface may be used.

In step S1, the information processing apparatus 700 receives video data captured by the main cameras 23 and 28 and sub cameras 31 and 32 of the HMD main body 10. For the sake of simplicity, assume that each of the main cameras 23 and 28 and the sub cameras 31 and 32 captures an image at 30 frames/sec, and outputs (transmits) the captured image as a video to the information processing apparatus 700. Therefore, it is to be understood that the processing based on the flowchart of Fig. 8 is executed every 1/30 sec.

In step S2, a position and orientation detecting unit 703 analyzes image data in the left and right videos received from the sub cameras 31 and 32. The position and orientation detecting unit 703 detects a preset number of markers 301 existing in the image data, and then specifies the markers and detects (calculates) the position and orientation of the HMD main body 10 based on the orientations, sizes, and the like of the markers with reference to the storage device 702. This processing is known and a detailed description thereof will be omitted.

In step S3, a CG generating unit 704 generates, based on the position and orientation of the HMD main body 10 detected by the position and orientation detecting unit 703, image data each representing a virtual object to be seen from the right and left viewpoints of the observer H. In step S4, a CG synthesizing unit 705 synthesizes the generated image data each representing the virtual object at corresponding positions in the right and left image data captured by the main cameras 28 and 23. In step S5, the information processing apparatus 700 transmits the synthesized right and left image data to the HMD main body 10 as video frames. As a result, the HMD main body 10 executes processing of displaying the received synthesized image data for the right and left eyes on the display devices 21a and 21b.

As described above, according to the embodiment, the sub cameras having wider shooting fields of view including those of the main cameras for acquiring videos corresponding to the field of view of the observer are incorporated separately from the main cameras, and used to detect markers for detecting the position and orientation of the HMD main body 10. As a result, it is possible to detect the position and orientation using a smaller number of markers.

By providing the sub cameras outside the main cameras, it is possible to improve the detection accuracy of the position and orientation of the HMD main body. The sub cameras can stably detect the markers by setting the sub cameras so that their fields of view include a ceiling or floor, and arranging the markers on the ceiling or floor. By setting the size in the vertical direction of the field of view of each sub camera to be larger than the size in the horizontal direction of the field of view, it is possible to readily detect the markers arranged on the ceiling or floor.

Since the observer visually perceives images of the physical space captured by the main cameras 23 and 28, it is desirable that the main cameras 23 and 28 capture color images and the display devices 21a and 21b display color images. If markers for detecting the position and orientation are monochrome, the sub cameras 31 and 32 desirably include imaging devices for capturing monochrome images. In general, in an imaging device for capturing a color image, R, G, and B sensors are arranged in a matrix pattern, and processing of calculating the average value of the pixel values of the adjacent components of the same type is performed at the time of demosaicing processing. To the contrary, in a sensor for capturing a monochrome image, demosaicing processing is not necessary, and a high-resolution image can be captured accordingly.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation.

## Claims

1. A wearable display apparatus (10) incorporating display units (21a, 21b) for displaying videos to be presented to an observer, comprising:
first image capturing means (23, 28) formed of a pair of cameras and configured to capture images, to be displayed on the display units, in a respective line of sight direction of the observer when the display apparatus is worn; and
second image capturing means (31, 32) formed of a pair of cameras, configured to capture images for marker detection and having an angle of view wider than that of the first image capturing means to include a field of view of the first image capturing means,
**characterized in that** right and left camera of the pair of cameras forming the second image capturing means are arranged respectively outside right and left camera of the pair of cameras forming the first image capturing means so that a parallax between the pair of cameras forming the second image capturing means is larger than a parallax between the pair of cameras forming the first image capturing means, and
**in that** an optical axis of one camera of the pair of cameras forming the second image capturing means faces in an upward direction and the optical axis of the other in a downward direction by a preset angle with respect to an optical axis of each camera of the pair of cameras forming the first image capturing means.

2. The apparatus according to claim 1, wherein a size in a vertical direction of a range of the field of view captured by the second image capturing means is larger than a size in a horizontal direction.

3. A system comprising the display apparatus (10) according to claim 1 and an information processing apparatus (700) which is connected to the display apparatus (10) and generates images to be displayed on the display units (21) of the display apparatus, the information processing apparatus comprising:
detecting means (703) configured to detect a position and orientation of the display apparatus by analyzing image data captured by the second image capturing means and detecting a predetermined marker;
generating means (704) configured to generate, based on the detected position and orientation, image data each representing a virtual object to be synthesized;
synthesizing means (705) configured to synthesize the generated image data with image data captured by the first image capturing means, respectively; and
output means (705) configured to output the synthesized image data to the display units of the display apparatus, respectively.

4. A control method for an information processing apparatus comprising the steps of:
connecting the information processing apparatus to the display apparatus according to claim 1 worn by an observer
generating images to be displayed on the display units of the display apparatus;
detecting a position and orientation of the display apparatus by analyzing image data captured by the second image capturing means and detecting a predetermined marker;
generating, based on the detected position and orientation, image data each representing a virtual object to be synthesized;
synthesizing the generated image data with image data captured by the first image capturing means, respectively; and
outputting the synthesized image data to the display units of the display apparatus, respectively.

## Patentansprüche

1. Tragbare Anzeigevorrichtung (10), die Anzeigeeinheiten (21a, 21b) zum Anzeigen von einem Beobachter zu zeigenden Videos enthält, umfassend:
eine erste Bildaufnahmeeinrichtung (23, 28), die aus einem Kamerapaar gebildet ist und konfiguriert ist, auf den Anzeigeeinheiten anzuzeigende Bilder in einer jeweiligen Blickrichtung des Beobachters aufzunehmen, wenn die Anzeigevorrichtung getragen wird; und
eine zweite Bildaufnahmeeinrichtung (31, 32), die aus einem Kamerapaar gebildet ist und konfiguriert ist, Bilder zur Markierungserfassung aufzunehmen, und die einen größeren Blickwinkel als denjenigen der ersten Bildaufnahmeeinrichtung aufweist, um ein Sichtfeld der ersten Bildaufnahmeeinrichtung einzuschließen,
**dadurch gekennzeichnet, dass** eine rechte und eine linke Kamera des die zweite Bildaufnahmeeinrichtung bildenden Kamerapaares jeweils außerhalb einer rechten und einer linken Kamera des die erste Bildaufnahmeeinrichtung bildenden Kamerapaares angeordnet sind, sodass eine Parallaxe zwischen dem die zweite Bildaufnahmeeinrichtung bildenden Kamerapaar größer als eine Parallaxe zwischen dem die erste Bildaufnahmeeinrichtung bildenden Kamerapaar ist, und
dass eine optische Achse einer Kamera des die zweite Bildaufnahmeeinrichtung bildenden Kamerapaares in eine Aufwärtsrichtung zeigt und die optische Achse der anderen in eine Abwärtsrichtung, und zwar um einen voreingestellten Winkel in Bezug auf eine optische Achse einer jeweiligen Kamera des die erste Bildaufnahmeeinrichtung bildenden Kamerapaares.

2. Vorrichtung nach Anspruch 1, wobei eine Größe in einer vertikalen Richtung eines von der zweiten Bildaufnahmeeinrichtung aufgenommenen Bereichs des Sichtfelds größer als eine Größe in einer horizontalen Richtung ist.

3. System, welches die Anzeigevorrichtung (10) nach Anspruch 1 und eine Informationsverarbeitungsvorrichtung (700) umfasst, die mit der Anzeigevorrichtung (10) verbunden ist und Bilder erzeugt, die auf den Anzeigeeinheiten (21) der Anzeigevorrichtung anzuzeigen sind, wobei die Informationsverarbeitungsvorrichtung umfasst:
eine Erfassungseinrichtung (703), die konfiguriert ist, eine Position und eine Orientierung der Anzeigevorrichtung durch Analysieren von durch die zweite Bildaufnahmeeinrichtung aufgenommenen Bilddaten und durch Erfassen einer vorbestimmten Markierung zu erfassen;
eine Erzeugungseinrichtung (704), die konfiguriert ist, basierend auf der erfassten Position und Orientierung Bilddaten zu erzeugen, die jeweils ein zu synthetisierendes virtuelles Objekt darstellen;
eine Synthetisierungseinrichtung (705), die konfiguriert ist, die erzeugten Bilddaten mit durch die erste Bildaufnahmeeinrichtung aufgenommenen Bilddaten jeweils zu synthetisieren; und
eine Ausgabeeinrichtung (705), die konfiguriert ist, die synthetisierten Bilddaten an die Anzeigeeinheiten der Anzeigevorrichtung jeweils auszugeben.

4. Steuerverfahren für eine Informationsverarbeitungsvorrichtung, welches die folgenden Schritte umfasst:
Verbinden der Informationsverarbeitungsvorrichtung mit der Anzeigevorrichtung nach Anspruch 1, die von einem Betrachter getragen wird;
Erzeugen von Bildern, die auf den Anzeigeeinheiten der Anzeigevorrichtung anzuzeigen sind;
Erfassen einer Position und einer Orientierung der Anzeigevorrichtung durch Analysieren von durch die zweite Bildaufnahmeeinrichtung aufgenommenen Bilddaten und Erfassen einer vorbestimmten Markierung;
Erzeugen, basierend auf der erfassten Position und Orientierung, von Bilddaten, die jeweils ein zu synthetisierendes virtuelles Objekt darstellen;
jeweiliges Synthetisieren der erzeugten Bilddaten mit durch die erste Bildaufnahmeeinrichtung aufgenommenen Bilddaten; und
jeweiliges Ausgeben der synthetisierten Bilddaten an die Anzeigeeinheiten der Anzeigevorrichtung.

## Revendications

1. Appareil d'affichage technovestimentaire (10) intégrant des unités d'affichage (21a, 21b) pour afficher des vidéos devant être présentées à un observateur, comprenant :
des premiers moyens de capture d'image (23, 28) formés d'une paire de caméras et configurés pour capturer des images à afficher sur les unités d'affichage, dans une ligne respective d'une direction de visée de l'observateur lorsque l'appareil d'affichage est porté ; et
des seconds moyens de capture d'image (31 , 32) formés d'une paire de caméras, configurés pour capturer des images pour la détection de marqueurs et ayant un angle de vue plus large que celui des premiers moyens de capture d'image pour comporter un champ visuel des premiers moyens de capture d'image,
**caractérisé en ce que** des caméras droite et gauche de la paire de caméras formant les seconds moyens de capture d'image sont agencées respectivement à l'extérieur des caméras droite et gauche de la paire de caméras formant les premiers moyens de capture d'image, de sorte qu'une parallaxe entre la paire de caméras formant les seconds moyens de capture d'image soit plus importante qu'une parallaxe entre la paire de caméras formant les premiers moyens de capture d'image, et
**en ce qu'**un axe optique d'une première caméra de la paire de caméras formant les seconds moyens de capture d'image soit orienté dans une direction vers le haut et que l'axe optique de l'autre caméra soit orienté dans une direction vers le bas suivant un angle prédéfini par rapport à un axe optique de chaque caméra de la paire de caméras formant les premiers moyens de capture d'image.

2. Appareil selon la revendication 1, dans lequel une taille dans une direction verticale d'une plage du champ visuel capturé par les seconds moyens de capture d'image est plus importante qu'une taille dans une direction horizontale.

3. Système comprenant l'appareil d'affichage (10) selon la revendication 1 et appareil de traitement d'informations (700) qui est connecté à l'appareil d'affichage (10) et qui génère des images à afficher sur les unités d'affichage (21) de l'appareil d'affichage, l'appareil de traitement d'informations comprenant :
des moyens de détection (703) configurés pour détecter une position et une orientation de l'appareil d'affichage en analysant des données d'image capturées par les seconds moyens de capture d'image et en détectant un marqueur prédéterminé ;
des moyens de génération (704) configurés pour générer, sur la base de la position et de l'orientation détectées, des données d'image représentant chacune un objet virtuel devant être synthétisé ;
des moyens de synthèse (705) configurés pour synthétiser les données d'image générées avec des données d'image capturées par les premiers moyens de capture d'image, respectivement ; et
des moyens de sortie (705) configurés pour délivrer les données d'image synthétisées aux unités d'affichage de l'appareil d'affichage, respectivement.

4. Procédé de commande pour un appareil de traitement d'informations comprenant les étapes consistant à :
connecter l'appareil de traitement d'informations à l'appareil d'affichage selon la revendication 1 porté par un observateur ;
générer des images à afficher sur les unités d'affichage de l'appareil d'affichage ;
détecter une position et une orientation de l'appareil d'affichage en analysant des données d'image capturées par les seconds moyens de capture d'image et en détectant un marqueur prédéterminé ;
générer, sur la base de la position et de l'orientation détectées, des données d'image représentant chacune un objet virtuel devant être synthétisé ;
synthétiser les données d'image générées avec des données d'image capturées par les premiers moyens de capture d'image, respectivement ; et
délivrer en sortie les données d'image synthétisées aux unités d'affichage de l'appareil d'affichage, respectivement.
